Europäisches Patentamt

European Patent Office

Office européen des brevets

(11) Publication number: **0 047 533**
**A1**

## (12) EUROPEAN PATENT APPLICATION

(21) Application number: **81107165.3**

(22) Date of filing: **10.09.81**

(51) Int. Cl.³: **G 01 N 1/10**

(30) Priority: **10.09.80 IL 61030**

(43) Date of publication of application: **17.03.82**
**Bulletin 82/11**

(84) Designated Contracting States: **BE DE FR GB IT NL SE**

(71) Applicant: **Kibbutz Afikim Workers Group for Cooperative Settlement Ltd., Post Afikim 15148 (IL)**
Applicant: **Peles, Eli, Post Afikim 15148 (IL)**

(72) Inventor: **Peles, Eli, Post Afikim 15148 (IL)**

(74) Representative: **Weickmann, Heinrich, Dipl.-Ing Patentanwälte Dipl.Ing.H.Weickmann et al, Dipl.Phys.Dr.K.Fincke Dipl.Ing.F.A.Weickmann Dipl.Chem.B.Huber, Dr.-Ing.H.Liska Möhlstrasse 22, D-8000 München 86 (DE)**

(54) **An arrangement for taking liquid samples.**

(57) An arrangement for taking liquid samples from a pipe (1) in which the liquid flows in a pulsating flow, comprising a by-pass line (4) in the flow line, said by-pass (4) leading from one section of the line having a larger flow pressure to a section having a lower pressure, a chamber (7) with an outflow (8) for the sample to be tapped being provided in said by-pass (4).

Hdt.

An Arrangement for Taking Liquid Samples

The present invention concerns an arrangement for taking liquid samples, in particular liquids which pass through a pipe at a pulsating flow.

In pipe lines carrying milk, oil or the like which may or may not flow at uniform pulse rates, it is often desired to take samples of the flowing liquid for examination purposes. With liquids flowing continously a valve-controlled tap in any part of the line is adapted to quickly provide such a sample. However, when the liquid in the pipe line flows in a pulsating flow, the withdrawal of the samples thereof is complicated, since when samples are to be taken it may happen that at that particular moment there is no liquid flowing.

It is therefore the object of the present invention to provide an arrangement for taking liquid samples from a pipe line in which the liquid passes therethrough in a pulsating flow.

The invention consists in an arrangement for taking

0047533

- 2 -

liquid samples from a pipe in which the liquid flows in
a pulsating flow, comprising a by-pass line in the flow
line, said by-pass leading from one section of the line
having a larger flow pressure to a section having a lower
pressure, a chamber with an outflow for the sample to be
tapped being provided in said by-pass.

In a preferred embodiment of the invention said chamber
is cup-shaped.

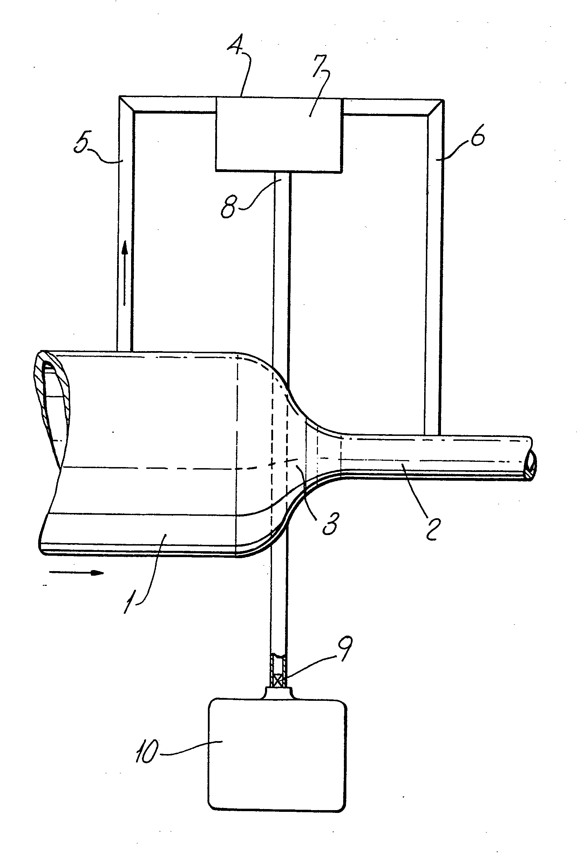

The invention is illustrated, by way of example only,
in the accompanying drawing showing schematically an
arrangement for taking liquid samples of a liquid flow
in a pulsating flow through a pipe.

A pipe line 1, in which there is a pulsated liquid flow,
is provided with a reduced section 2 so that a pressure
differential is obtained across position 3. A by-pass
line 4 is connected with its inflow tube 5 to line 1
and its outflow tube 6 to section 2, its central portion
being enlarged at 7 constituting a chamber which is preferably in the shape of a depending cup, but may be of any
suitable shape. The outflow 8 from cup 7 leads downwards
and is provieded with a valve 9, the bottom of outflow 8
being provided with means to attach a sample bottle 10
or the like.

It can be seen that whenever liquid flows through pipe line 1
it will likewise flow through by-pass 4 and accumulate

- 3 -

in cup 7 to be tapped therefrom via outflow 8
and valve 9. Any excess liquid will flow through
outflow 6 and return to pipe 2.

It can be seen that there will always be a quantity
of liquid in cup 7 when valve 9 is closed even though
at the particular moment when the sample is to be
taken no liquid flows through pipe 1.

Instead of reducing the diameter of line 1 at position 3,
it is possible to achieve pressure differential in any
other suitable manner, as known per se.

## Claims

1. An arrangement for taking liquid samples from a pipe in which the liquid flows in a pulsating flow, comprising a by-pass line in the flow line, said by-pass leading from one section of the line having a larger flow pressure to a section having a lower pressure, a chamber with an outflow for the sample to be tapped being provided in said by-pass.

2. An arrangement as claimed in claim 1, wherein one section has a larger diameter, than the other.

3. An arrangement as claimed in claim 1 or 2, wherein said chamber is cup-shaped.

4. An arrangement as claimed in any preceding claim, wherein in the outflow from said chamber a valve is provided.

5. An arrangement for taking liquid samples from a pipe in which the liquid flow is pulsated, substantially as hereinbefore described and illustrated in the accompanying drawing.

European Patent Office

**EUROPEAN SEARCH REPORT**

0047533

Application number

EP 81 10 7165

## DOCUMENTS CONSIDERED TO BE RELEVANT

| Category | Citation of document with indication, where appropriate, of relevant passages | Relevant to claim |
|---|---|---|
| | FR - A - 2 250 111 (SOCIETE ALSACIENNE DE SERVICES INDUSTRIELS) <br><br> * page 4, lines 19-27; figure 6 * <br><br> -- | 1 |
| | US - A - 4 118 987 (GESELLSCHAFT ZUR WIEDERAUFBEREITUNG VON KERNBRENNSTOFFEN MBH) <br><br> * column 2, lines 14-44; figure 1 * <br><br> -- | 1-3 |
| | DE - C - 745 990 (EDUARD AHLBORN AG.) <br><br> * page 2, lines 9-29; figures * <br><br> -- | 1,4 |
| | DE - A - 2 824 153 (EDMUND BUEHLER) <br><br> * page 6, paragraph 2 to page 7, paragraph 2; figures * <br><br> -- | 1,3,4 |
| | US - A - 3 226 195 (J.W. DE LISLE NICHOLS) <br><br> * column 2, lines 10-19; figures * <br><br> ----- | 1,3,4 |

**CLASSIFICATION OF THE APPLICATION (Int. Cl.³)**

G 01 N 1/10

**TECHNICAL FIELDS SEARCHED (Int. Cl.³)**

G 01 N 1/10
1/14
1/18
1/20
33/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-12-1981 | KEMPIN |

EPO Form 1503.1 06.78